# EUROPÄISCHE PATENTSCHRIFT

(11) **EP 1 939 728 B1**
(45) Veröffentlichungstag und Bekanntmachung des Hinweises auf die Patenterteilung: **07.08.2024**
(21) Anmeldenummer: 06405538.7
(22) Anmeldetag: 21.12.2006
(51) Int. Cl.: G06Q 40/08, G06Q 30/0251

(54) **System und Verfahren zur Berechnung von Schäden durch Naturkatastrophen**
System and method for calculation damages from natural desasters
Système et procédé pour la calculation des degats des sinistres naturelles

(43) Veröffentlichungstag der Anmeldung: 02.07.2008
(73) Patentinhaber: Swiss Reinsurance Company Ltd., 8022 Zürich (CH)
(72) Erfinder: Bresch, David, Zürich (CH); Spühler, Markus, 8306 Brüttisellen (CH)
(74) Vertreter: Leimgruber, Fabian Alfred Rupert

(56) Entgegenhaltungen:
- EP-A1- 1 022 658
- US-A- 5 212 777
- US-A1- 2005 160 239
- US-A1- 2005 216 386

## Beschreibung

### Technisches Gebiet

Die vorliegende Erfindung betrifft ein System und ein Verfahren zur Berechnung von Schäden durch Naturkatastrophen. Die vorliegende Erfindung betrifft insbesondere ein computerbasiertes System und ein computerimplementiertes Verfahren zur Berechnung von erwarteten Schäden durch Naturkatastrophenereignisse an einer Vielzahl von versicherten Objekten eines Portfolios.

### Stand der Technik

Versicherungsportfolios für die Versicherung von Objekten für Schäden durch Naturkatastrophen wie Stürme, Überflutungen oder Erdbeben umfassen insbesondere auf der Rückversicherungsebene eine Vielzahl, beispielsweise Zehntausende oder Hunderttausende, von geografisch verteilten Versicherungsobjekten wie Einfamilienhäuser, Mehrfamilienhäuser und gewerblichen Gebäuden und/oder deren Inhalt. Um die Schäden zu bestimmen, die in der Zukunft erwartungsgemäss an den Versicherungsobjekten durch Naturkatastrophenereignisse entstehen, werden historische Informationen über Naturkatastrophenereignisse der Vergangenheit berücksichtigt. Zudem werden auch Datensätze mit simulierten Naturkatastrophenereignissen erzeugt und für die Bestimmung der erwarteten Schäden an den Versicherungsobjekten verwendet. Für jedes historische oder simulierte Naturkatastrophenereignis kann eine Ereignisstärke oder Ereignisintensität, eine Ereignisfrequenz und/oder eine Ereigniswahrscheinlichkeit angegeben werden. Je grösser die Anzahl der berücksichtigten historischen und/oder simulierten Naturkatastrophenereignisse respektive die Länge des berücksichtigten Zeitraums ist, umso genauer und zuverlässiger können die erwarteten Schäden bestimmt werden. Dasselbe trifft auch auf die Auflösung der Versicherungsobjekte zu. Je grosser die geografische Auflösung der Versicherungsobjekte, umso genauer können unterschiedliche Schadensempfindlichkeiten der Versicherungsobjekte und damit die erwarteten Schäden berücksichtigt werden. Um jedoch eine Bestimmung eines erwarteten Schadens an Portfolio mit Hunderttausenden von Versicherungsobjekten, Tausenden von unterschiedlichen Schadenempfindlichkeitsfunktionen der versicherten Objekte und mit Naturkatastrophenereignissen über einen langen Zeitraum von mehreren Hundert oder Tausend Jahren vorzunehmen, müssen je nach Rechenleistung des verrechneten Computers mehrere Dutzend Stunden an Rechenzeit eingesetzt werden. Der Einsatz derart langer Rechenzeit mag sich zwar in einzelnen Fällen lohnen, ist jedoch für den täglichen Einsatz zur Einschätzung von Versicherungsportfolios und zur darauf basierenden Berechnung von Versicherungsprämien nicht sehr effizient und für die Berechnung einer Vielzahl von Versicherungsportfolios ungeeignet.

Das Dokument US 2005/0160239 A1 des Standes der Technik zeigt ein Multiprozessorsystem, das Master- und Slave-Prozessoren, einen Cache-Kohärenz-Kontroller und Adressanreicherungsvorrichtungen umfasst, sowie ein Verfahren zur Verbesserung kohärenter Datenübertragungen. Es wird eine Befehlstransaktion generiert und eine Anfrage von einem Initiator gesendet. Tags, die den Antworten oder weiteren Anforderungsantworten hinzugefügt werden, streamen auf Highspeed-Busse. Snoops und akkumulierte Snoops erweitern die Cacheline-Anforderungen, da jeder Prozessor Burst-Befehle in mehrere Cacheline-Anforderungen aufteilt. Adressenkonzentratoren, die eine Cacheline-Warteschlangenfunktion enthalten, leiten Transaktionsanforderungen an ein globales Serialisierungsgerät weiter, wo ein Warteschlangenprozess Indizes priorisiert und die Ergebnisse unter den Prozessoren koordiniert. Der Cache gibt für jede betroffene Zeile einen einzelnen Burst-Befehl aus. Dadurch wird Systemkohärenz, Leistung und Latenzzeit verbessert. Zusätzliche Unterstützung für Burst-Übertragungen zwischen kohärenten Prozessoren wird bereitgestellt. Weiter zeigt US 5212777A aus dem Stand der Technik Multiprozessorsystem, das als Bild- und Grafikprozessor ausgebildet ist. Der Prozessor hat mehrere Einzelprozessoren, die alle uneingeschränkt Kommunikationsverbindungen zu mehreren Speichern haben. Ein Crossbar-Switch dient der Herstellung der Prozessor-Speicherverbindungen. Der gesamte Bildprozessor mit den einzelnen Prozessoren, dem Crossbar-Switch und den Speichern befindet sich auf einem Siliziumchip. Jeder Prozessor kann so arbeiten, dass er denselben Befehl zur gleichen Zeit (SIMD-Modus) oder verschiedene Befehle zur gleichen Zeit (MIMD-Modus) ausführt. Das Dokument US 2005/0216386 A1 zeigt ein System zur Absicherung von Naturkatastrophenrisiken mittels sogenannter Katastrophen-Bonds (Cat Bonds). Das System generiert eine oder mehrere Risikoklassen, wobei jede Risikoklasse eine oder mehrere Naturkatastrophenrisiken umfasst. Für jede Risikoklasse wird ein spezifisches Risikoderivat in Form eines Katastrophen-Bonds (sog. Cat Bond) erzeugt. Die Höhe des Investment Return wird dabei in Abhängigkeit davon getriggert, ob sich ein bestimmtes Naturkatastrophenereignis ereignet oder nicht. Das System stellt die entsprechenden Derivate aus und verwaltet den Investment Return. Als Ausführungsform können die Naturkatastrophenrisiken einer Risikoklasse vom System derart gewählt werden, dass sie nicht korreliert sind. Schliesslich offenbart EP 1022658 A1 ein Verfahren zur Lastverteilung in einem Realzeit-Multiprozessorsystem und ein Multiprozessorsystem, wobei auf jedem Prozessor eine Verteilquote geführt wird, die den Anteil der verteilbaren Last, der tatsächlich verteilt werden soll, festsetzt. Die Verteilquote wird in Zeitintervallen neu bestimmt. Die einzige Information, die jedes Zeitintervall von den anderen Prozessoren benötigt wird, sind Lastwertindikatoren, die von einer geschätzten Last abhängen. Zusätzlich werden Wahrscheinlichkeiten geführt, welche angeben, wie bei Lastverteilung Last von einem auf die anderen Prozessoren übertragen wird. Anschliessend verteilt jeder Prozessor anhand seiner Verteilquote und seiner Lastverteilungsfaktoren seine verteilbare Last an andere Prozessoren, wenn seine Verteilquote einen vorgegebenen Wert überschreitet.

### Darstellung der Erfindung

Es ist eine Aufgabe der vorliegenden Erfindung ein computerbasiertes System und ein computerimplementiertes Verfahren zur Berechnung von erwarteten Schäden durch Naturkatastrophenereignisse an einer Vielzahl von versicherten Objekten eines Portfolios vorzuschlagen, welches System und welches Verfahren eine effiziente Berechnung der erwarteten Schäden an Hunderttausenden von versicherten Objekten unter Berücksichtigung von Naturkatastrophenereignissen über mehrere Hundert Jahre ermöglichen, wobei die Rechenzeit bei gleicher Rechengenauigkeit gegenüber herkömmlichen Systemen respektive Verfahren reduziert wird.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Die oben genannten Ziele werden durch die vorliegende Erfindung insbesondere dadurch erreicht, dass das computerbasierte System mehreren, vernetzten Prozessoreinheiten zur auf die mehreren Prozessoreinheiten verteilten Berechnung von zu erwarteten Schäden durch Naturkatastrophenereignisse an einer Vielzahl von versicherten Objekten eines Portfolios (L3) umfasst, dass das System eine Datenbank und eine Koordinationseinheit umfasst, die über ein Telekommunikationsnetzwerk mit den mehrere Prozessoreinheiten verbunden ist, wobei die Datenbank historische oder simulierte Naturkatastrophenereignisse für einen definierten Zeitraum von mindestens mehreren hundert Jahren umfasst, und wobei die Naturkatastrophenereignisse mindestens eine Ereignisidentifizierung, ein Ereignistyp, ein Ereignisort, eine Ereignisintensität und eine Ereignisfrequenz umfassen, dass das System ein Datenstrukturierungsmodul zum Zuordnen der versicherten Objekte zu einem Risikotyp und geografischen Risikogebiet einer Risikogruppe (L2) umfasst, wobei die Datenbank zu jedem der Vielzahl von Objekten ein Objektschlüssel mit mindestens einer Risikogruppe (L2), einer Risikoeinheit und einem Deckungsumfangstyp zugeordnet abgespeichert umfasst, dass das System eine Vielzahl von definierten, ausführbaren Schadensempfindlichkeitsfunktionen umfassend in der Datenbank umfasst, wobei eine Schadensempfindlichkeitsfunktion in Abhängigkeit von der dem Objektschlüssel zugeordneten Risikogruppe, Risikogebiet, Risikotyp und Deckungsumfangstyp mittels der Datenbank bestimmbar ist und wobei mittels der bestimmten Schadensempfindlichkeitsfunktion basierend auf einer Ereignisstärke oder-Intensität am Ort eines Objektes ein Schadensgrad für ein gespeichertes Naturkatastrophenereignisse für einen Ereignistyp bestimmbar ist, dass das System ein Instruktionsgenerator umfasst
- zum Bereitstellen und Übermitteln von verschiedenen Instruktionsdaten für jeweils eine der Prozessoreinheiten, welche Instruktionsdaten Angaben zu mindestens einem Teil der versicherten Objekte und deren Zuordnung zu einem Risikotyp und geografischen Risikogebiet einer Risikogruppe (L2) umfassen, wobei die Instruktionsdaten für die Prozessoreinheiten jeweils für unterschiedliche auf die Prozessoreinheiten aufgeteilte Teilbereiche der Naturkatastrophenereignisse bereitgestellt werden, welche verschiedene Risikogebiete zuordenbar sind, so dass die Instruktionsdaten für jeweils eine der Prozessoreinheiten mit Angaben zu Naturkatastrophenereignissen bereitgestellt werden, welche einem Risikogebiet zugeordnet sind, für das der betreffenden Prozessoreinheit mindestens ein versichertes Objekt zugeteilt ist,
- zum Aufteilen und Übertragen der Schadensempfindlichkeitsfunktionen zur Speicherung im lokalen Cache der Prozessoreinheiten für die zur Berechnung von Teilschäden auf den Prozessoreinheiten, wobei in den lokalen Caches der Prozessoreinheiten jeweils mindestens eine Schadensempfindlichkeitsfunktion gespeichert wird, wobei die Instruktionsdaten für die Prozessoreinheiten bereitgestellt werden, deren Zuordnungen zu einem Risikotyp und geographischen Risikogebiet jeweils eine im lokalen Cache gespeicherte Schadenempfindlichkeitsfunktion bestimmen,
- zum Zuweisen jeder Prozessoreinheit einer möglichst gleichmässige Anzahl Objekte, wobei die Schadensempfindlichkeitsfunktion und Objekte auf die Prozessoreinheiten verteilt werden, und wobei einer Prozessoreinheit nur diejenigen versicherten Objekte zugeordnete werden, für die im lokalen Cache der betreffenden Prozessoreinheit eine Schadensempfindlichkeitsfunktion gespeichert ist,
dass das System Steuermodule zum Steuern der Prozessoreinheiten umfasst derart, dass die Prozessoreinheiten jeweils basierend auf ihnen zugewiesenen Instruktionsdaten und basierend auf einer durch die Zuordnung der versicherten Objekte zu einem Risikotyp und geografischen Risikogebiet bestimmten Schadenempfindlichkeitsfunktion Teilschadenangaben berechnen für einen erwarteten Schaden durch eines der Naturkatastrophenereignisse an einem der versicherten Objekte, wobei das Steuermodul die Teilschadenangaben für die versicherten Objekte, für die durch Risikogebiet und Risikotyp definierten Risikoeinheiten und für die Risikogruppen aggregiert und die aggregierten Teilschadenangaben in der Datenbank speichert, und dass das System ein Schadenberechnungsmodul zum Bestimmen eines erwarteten Schadens für das gesamte Portfolio (L3) basierend auf den aggregierten Teilschadenangaben der Datenbank.

Die Prozessoreinheiten sind beispielsweise jeweils auf einem separaten Server angeordnet und die Instruktionsdaten werden über ein Kommunikationsnetz an die betreffenden Prozessoreinheiten übermittelt.

Die versicherten Objekte werden beispielsweise jeweils in einer hierarchischen Datenstruktur, beispielsweise eine Baumstruktur, mit den absteigend angeführten Hierarchiestufen Portfolio, Risikogruppe, geografisches Risikogebiet und Risikotyp, sowie Deckungsumfangstyp angeordnet, und die zu verwendende Schadenempfindlichkeitsfunktion wird auf Grund der Risikogruppe, des geografischen Risikogebiets und Risikotyps, und des Deckungsumfangstyps bestimmt. Die Angaben zu den versicherten Objekten umfassen zudem jeweils einen Deckungsumfangswert. Die Teilschadenangaben für ein versichertes Objekt werden basierend auf seinem Deckungsumfangswert, auf der für das versicherte Objekt bestimmten Schadenempfindlichkeitsfunktion und basierend auf den Daten eines Naturkatastrophenereignisses berechnet. Das für die Berechnung einer Schadensteilangabe zu verwendende Naturkatastrophenereignis ergibt sich beispielsweise aus einer entsprechenden Identifizierung oder Präsenz (d.h. konkrete Daten zum Naturkatastrophenereignis) in den Instruktionsdaten oder auf Grund seiner Präsenz in einem lokalen Speicher (Cache) der betreffenden Prozessoreinheit. Die Daten der Naturkatastrophenereignisse werden aus einer (zentralen) Datenbank oder einem lokalen Datenspeicher, insbesondere ein Cache, der Prozessoreinheit bezogen. Die lokal in den Prozessoreinheiten gespeicherten Daten der Naturkatastrophenereignisse werden beispielsweise in den Instruktionsdaten oder in einem vorbereitenden separaten Schritt an die Prozessoreinheiten übertragen. Die Schadensteilangaben werden beispielsweise lokal in der Prozessoreinheit zu einem oder mehreren Teilergebnissen aggregiert oder in einer Datenbank gespeichert.

Durch die Aufteilung der Berechnungen von Teilschadenangaben auf mehrere Prozessoreinheiten kann die Gesamtrechenzeit, die bei der Berechnung des für das Portfolio erwarteten Schadens durch bloss eine Prozessoreinheit benötigt würde, reduziert werden. Der erwartete Gesamtschaden kann durch Summieren (Aggregieren) der einzelnen Teilschadenangaben berechnet werden. Durch die Zuordnung der versicherten Objekte zu einem Risikotyp und einem geografischen Risikogebiet einer Risikogruppe kann für das betreffende Objekt lokal und direkt in der Prozessoreinheit, wo ein Teilschaden mit einer Teilschadenangabe für das Objekt berechnet wird, die zutreffende Schadenempfindlichkeitsfunktion bestimmt werden. Insbesondere wenn die Schadenempfindlichkeitsfunktionen im lokalen Cache der Prozessoreinheiten gespeichert werden, kann dadurch die Zeit für die Anfrage und Übermittlung der Schadenempfindlichkeitsfunktionen von einem vernetzten Server eingespart werden.

In einer Ausführungsvariante werden in lokalen Caches der Prozessoreinheiten jeweils mindestens eine Schadenempfindlichkeitsfunktion gespeichert und die Instruktionsdaten für jeweils eine der Prozessoreinheiten werden mit Angaben zu versicherten Objekten bereitgestellt, deren Zuordnungen zu einem Risikotyp und geografischen Risikogebiet jeweils eine im lokalen Cache gespeicherte Schadenempfindlichkeitsfunktion bestimmen. Insbesondere wenn eine grosse Anzahl von unterschiedlichen Schadenempfindlichkeitsfunktionen verwendet wird, die nicht alle im lokalen Cache der Prozessoreinheiten gespeichert werden können, z.B. Zehntausend oder mehr, kann die Zeit für die Anfrage und Übermittlung der Schadenempfindlichkeitsfunktionen eingespart werden, wenn einer Prozessoreinheit bloss diejenigen versicherten Objekte zur Berechnung zugewiesen werden, für die im lokalen Cache der betreffenden Prozessoreinheit eine Schadenempfindlichkeitsfunktion gespeichert ist.

In einer Ausführungsvariante werden die Instruktionsdaten für die Prozessoreinheiten jeweils für unterschiedliche auf die Prozessoreinheiten aufgeteilte Teilbereiche der Naturkatastrophenereignisse bereitgestellt. Den verschiedenen Risikogebieten sind beispielsweise zum Teil unterschiedliche Naturkatastrophenereignisse zugeordnet. Die Instruktionsdaten werden dann für jeweils eine der Prozessoreinheiten mit Angaben zu versicherten Objekten eines geografischen Risikogebiets bereitgestellt, für das in der betreffenden Prozessoreinheit mindestens ein zugeordnetes Naturkatastrophenereignis zugeteilt ist, und/oder die Instruktionsdaten werden für jeweils eine der Prozessoreinheiten mit Angaben zu Naturkatastrophenereignissen bereitgestellt, welche einem Risikogebiet zugeordnet sind, für das der betreffenden Prozessoreinheit mindestens ein versichertes Objekt zugeteilt ist. Dabei sind die betreffenden Teilbereiche der Naturkatastrophenereignisse beispielsweise jeweils in einer der Prozessoreinheiten gespeichert oder werden zusammen mit den Angaben zu den versicherten Objekten in den Instruktionsdaten an die Prozessoreinheiten übertragen. Somit wird einerseits die Berechnung von Teilschadenangaben für unterschiedliche Naturkatastrophenereignisse auf mehrere Prozessoreinheiten aufgeteilt und andererseits werden den Prozessoreinheiten jeweils bloss solche versicherten Objekte zugeteilt, die in geografischen Risikogebieten lokalisiert sind, für die die Naturkatastrophenereignisse relevant sind. Dadurch kann das System respektive das Verfahren von "Nullrechnungen" entlastet werden, bei welchen Rechenschritte für Teilschadenangaben durchgeführt werden, die zu keinem Beitrag führen, weil das betreffende versicherte Objekt nicht in einem geografischen Risikogebiet liegt, das vom Naturkatastrophenereignis beeinflusst wird.

In einer Ausführungsvariante wird in den Prozessoreinheiten jeweils mindestens ein Teil der Naturkatastrophenereignisse in einem lokalen Cache gespeichert und die Instruktionsdaten werden für jeweils eine der Prozessoreinheiten zur Verarbeitung mit Naturkatastrophenereignissen bereitgestellt, welche im lokalen Cache der Prozessoreinheit gespeichert sind, d.h. die Instruktionsdaten werden mit Angaben zu versicherten Objekten bereitgestellt, für welche Teilschadenangaben mit im lokalen Cache der Prozessoreinheit gespeicherten Naturkatastrophenereignissen berechnet werden sollen. Beispielsweise werden in den Instruktionsdaten den versicherten Objekten Identifizierungen von im Cache gespeicherten Naturkatastrophenereignissen zugeordnet oder für sämtliche in den Instruktionsdaten enthaltene versicherte Objekte werden Teilschadenangaben für sämtliche im Cache gespeicherten Naturkatastrophenereignisse berechnet. Typischerweise ist die Anzahl der Naturkatastrophenereignisse zu gross um vollständig im lokalen Cache der Prozessoreinheiten gespeichert werden zu können, deshalb kann die Zeit für die Anfrage und Übermittlung der Daten zu den Naturkatastrophenereignissen eingespart werden, wenn einer Prozessoreinheit bloss diejenigen versicherten Objekte zur Berechnung zugewiesen werden, für die im lokalen Cache der betreffenden Prozessoreinheit die Daten zu den Naturkatastrophenereignissen gespeichert sind.

In einer Ausführungsvariante umfassen die Instruktionsdaten Angaben für einen Satz von versicherten Objekten des Portfolios. Daten des Naturkatastrophenereignisses, das für die Berechnung der Teilschadenangabe verwendet wird, werden aus einem Datenspeicher bezogen. In einer Variante werden die Daten des Naturkatastrophenereignisses jeweils aus einem lokalen Speicher oder Cache der betreffenden Prozessoreinheit bezogen und es werden für jedes versicherte Objekt im empfangenen Satz Teilschadenangaben mit jedem lokal gespeicherten Naturkatastrophenereignis berechnet. In einer alternativen Variante umfassen die Instruktionsdaten Angaben für sämtliche versicherten Objekte des Portfolios; die Daten des Naturkatastrophenereignisses werden aus einer zentralen Datenbank bezogen; und ein für ein versichertes Objekt bereits verwendetes Naturkatastrophenereignis wird in der Datenbank entsprechend markiert.

In einer Ausführungsvariante werden Instruktionsdaten bereitgestellt, welche Angaben zur Identifizierung einer Vielzahl von Naturkatastrophenereignissen und Angaben zur Identifizierung des Portfolios, der Risikogruppe und des Risikotyps und geografischen Risikogebiets eines versicherten Objekts umfassen. Berechnete Teilschadenangaben oder Aggregate davon werden zugeordnet zu einem versicherten Objekt gespeichert.

### Kurze Beschreibung der Zeichnungen

Nachfolgend wird eine Ausführung der vorliegenden Erfindung anhand eines Beispieles beschrieben. Das Beispiel der Ausführung wird durch die folgenden beigelegten Figuren illustriert:
Figur 1 zeigt ein Blockdiagramm, welches schematisch ein computerbasiertes System illustriert, das mehrere vernetzte Prozessoreinheiten umfasst zur Berechnung von Schäden, die durch Naturkatastrophenereignisse verursacht werden.
Figur 2 zeigt ein Blockdiagramm, das eine Datenstruktur eines Portfolios von versicherten Objekten illustriert, in welcher die versicherten Objekte jeweils einem Risikotyp und geografischen Risikogebiet einer Risikogruppe zugeordnet sind.
Figur 3 zeigt ein Flussdiagramm, das ein Beispiel eines vereinfachten Verfahrensablaufs zur Berechnung von erwarteten Schäden an versicherten Objekten eines Portfolios durch Naturkatastrophenereignisse darstellt.
Figur 4 zeigt ein Blockdiagramm, das schematisch versicherte Objekte eines Portfolios und Naturkatastrophenereignisse illustriert, die auf verschiedene Prozessoreinheiten aufgeteilt werden.

### Wege zur Ausführung der Erfindung

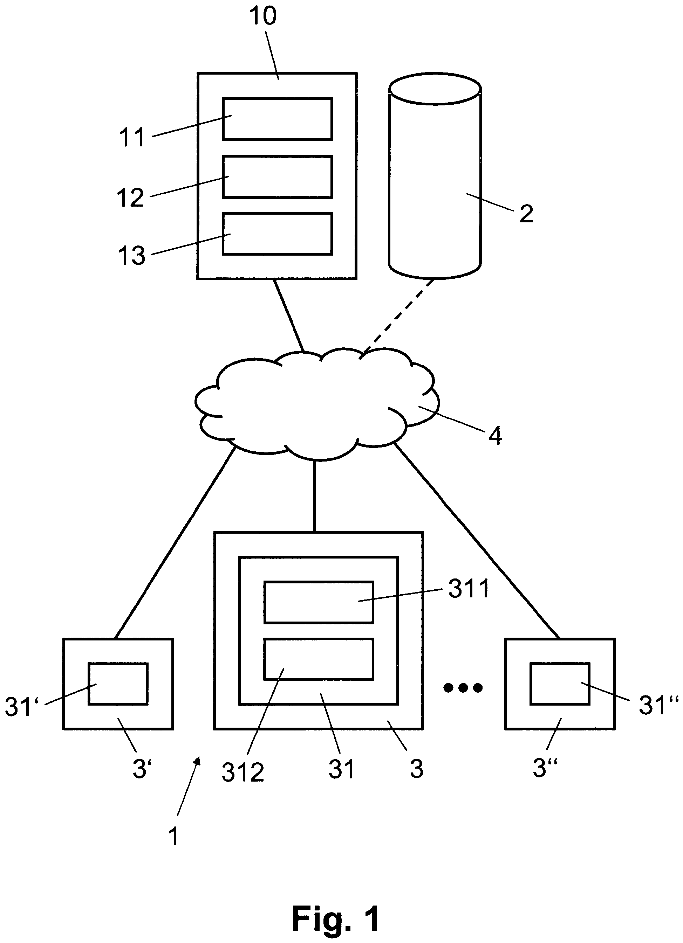

In der Figur 1 bezeichnet das Bezugszeichen 1 ein computerbasiertes System zur Berechnung von Schäden, die durch Naturkatastrophenereignisse an versicherten Objekten eines definierten Portfolios verursacht werden.

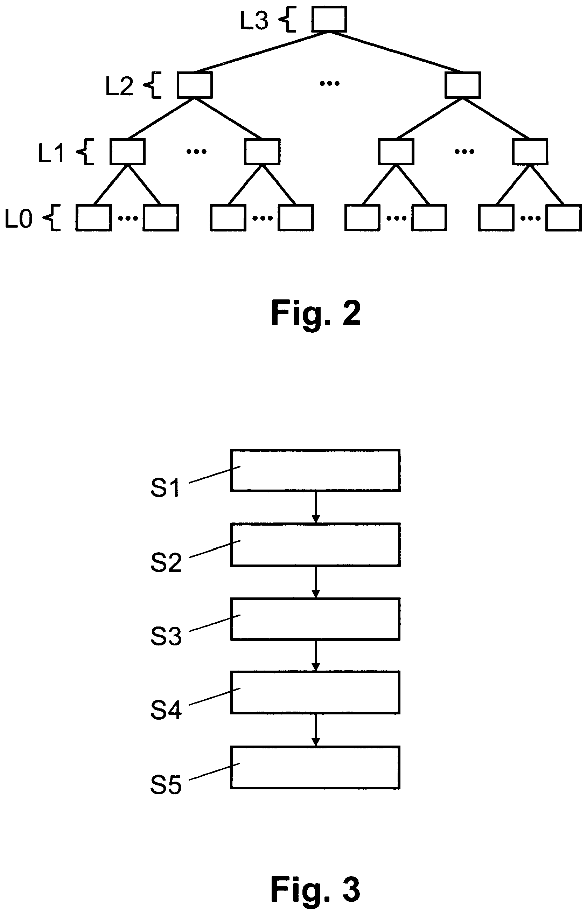

Wie in der Figur 2 dargestellt ist, umfasst das Portfolio L3 mehrere Risikogruppen L2, die beispielsweise die Bedrohung durch eine oder mehrere Naturkatastrophen wie Stürme, Überflutungen und Erdbeben abdecken. Jeder Risikogruppe L2 sind mehrere Risikoeinheiten L1 zugeordnet, die jeweils durch ein geografisches Risikogebiet und einen Risikotyp definiert sind. Das geografische Risikogebiet definiert einen bestimmten geografischen Bereich, in welchem die versicherten Objekte angeordnet sind, und der Risikotyp bestimmt eine definierte Kategorie von versicherten Objekten, beispielsweise Einfamilienhäuser, Mehrfamilienhäuser, industrielle Gebäude, etc. Jeder Risikoeinheit L1 sind mehrere Datenelemente zugeordnet, die jeweils den Deckungsumfang L0 eines versicherten Objekts definieren. Der Deckungsumfang L0 bestimmt den Deckungsumfangstyp, beispielsweise ob das Gebäude selber und/oder der Inhalt eines Gebäudes versichert sind, und den Deckungsumfangswert eines versicherten Objekts. Der Deckungsumfang L0 kann auch einen aggregierten Deckungsumfangswert umfassen, der beispielsweise die Deckungsumfangswerte von mehreren in einem geografischen Teilbereich angeordneten versicherten Objekten summiert.

Das computerbasierte System 1 umfasst eine zentrale Datenbank 2 und eine computerbasierte Koordinationseinheit 10, die über ein Telekommunikationsnetz 4 mit mehreren Prozessoreinheiten 31, 31', 31" verbunden sind, von denen in der Figur 1 vereinfacht bloss drei Einheiten schematisch dargestellt sind. Das System 1 umfasst beispielsweise 4, 16, 32, 64 oder mehr Prozessoreinheiten 31, 31', 31". Die Datenbank 2 und die Koordinationseinheit 10 sind auf demselben oder auf mehreren verschiedenen Computern ausgeführt.

In der Datenbank 2 sind Daten von historischen und/oder simulierten Naturkatastrophenereignissen für einen ausgedehnten Zeitraum von mehreren hundert oder tausend Jahren gespeichert. Die Daten eines Naturkatastrophenereignisses umfassen eine Ereignisidentifizierung, ein Ereignistyp, z.B. Sturm, Überflutung oder Erdbeben, ein Ereignisort, z.B. Koordinaten in Längen- und Breitengraden, eine Ereignisstärke oder -intensität, sowie eine Ereigniswahrscheinlichkeit oder -frequenz. Die Datenbank 2 umfasst zudem eine Vielzahl von Schadensempfindlichkeitsfunktionen, welche für ein versichertes Objekt abhängig von seiner Risikogruppe L2, seinem Risikogebiet und Risikotyp, sowie seinem Deckungsumfangstyp eine Schadenempfindlichkeitsfunktion für die gespeicherten Ereignisse definieren. Die Schadenempfindlichkeitsfunktionen bestimmen jeweils für einen Ereignistyp den Schadensgrad für ein versichertes Objekt abhängig von der Ereignisstärke oder -intensität am Ort des versicherten Objekts. Die Datenbank 2 ist überdies eingerichtet zum Speichern von Portfolios L3 versicherter Objekte entsprechend der in der Figur 2 dargestellten Datenstruktur. Beispielsweise wird jedem versicherten Objekt ein Objektschlüssel aus den Elementen Portfolio L3, Risikogruppe L2, Risikoeinheit L1 und Deckungsumfangstyp zugeordnet gespeichert, wie in der Tabelle 1 dargestellt ist.

**Tabelle 1**

| Angaben über versichertes Objekt | | | | |
|---|---|---|---|---|
| Objektschlüssel | | | | Objekt |
| Portfolio L3 | Risikogruppe L2 | Risikoeinheit L1 | Deckungsumfang L0 | |
| | | | Deckungsumfangstyp | Deckungsumfangswert |

Die Koordinationseinheit 10 umfasst mehrer funktionale Module, nämlich ein Datenstrukturierungsmodul 11, ein Instruktionsgenerator 12 und ein Schadenberechnungsmodul 13. Die funktionalen Module sind vorzugsweise als programmierte Softwaremodule ausgeführt. Der Computerprogrammcode der Softwaremodule ist Teil eines Computerprogrammprodukts und ist vorzugsweise in einem Computer der Koordinationseinheit 10 gespeichert, auf einem computerlesbaren Datenträger, der fest oder entfernbar mit dem Computer verbunden ist.

Die Prozessoreinheiten 31, 31', 31" sind jeweils auf einem computerbasierten Server 3, 3', 3" ausgeführt und umfassen einen lokalen Datenspeicher insbesondere einen Cache 312, d.h. ein schnell zugreifbarer Pufferspeicher, und ein Steuermodul 311, das vorzugsweise als programmiertes Softwaremodul ausgeführt ist.

Die Funktionalität der funktionalen Module der Koordinationseinheit 10 und des Steuermoduls 311 werden nachfolgend mit Bezug zu der Figur 2 beschrieben, in welcher der Verfahrensablauf für die Berechnung von erwarteten Schäden an den versicherten Objekten des Portfolios L3 durch in der Datenbank 2 definierte Naturkatastrophenereignisse vereinfacht dargestellt ist. Aggregierte erwartete Schäden an den versicherten Objekten eines Portfolios werden auf der Basis von Teilschäden bestimmt, die jeweils durch ein Naturkatastrophenereignis an einem versicherten Objekt verursacht werden. Die Berechnung der Teilschadenangaben für solche Teilschäden erfolgt verteilt in den Prozessoreinheiten 31, 31', 31". Ein Teilschaden respektive eine Teilschadenangabe wird auf der Basis der Schadenempfindlichkeitsfunktion und des Deckungsumfangswert des betreffenden versicherten Objekts berechnet, wobei die Schadenempfindlichkeitsfunktionen den Schadensgrad für das versicherte Objekt abhängig von der Stärke oder -intensität des Naturkatastrophenereignisses am Ort des versicherten Objekts bestimmt.

Im Schritt S1 ordnet das Datenstrukturierungsmodul 11 die versicherten Objekte, die beispielsweise von einer Portfoliodatei gelesen werden, jeweils entsprechend der Versicherungsart, dem Haftungsumfang, dem Objekttyp und dem Objektstandort einer Risikogruppe L2, einem geografischen Risikogebiet Risikotyp, und einem Deckungsumfangstyp zu.

Im Schritt S2 stellt der Instruktionsgenerator 12 für die Prozessoreinheiten 31, 31', 31" Instruktionsdaten bereit um Angaben über die Naturkatastrophenereignisse und/oder die versicherten Objekte für die Berechnung der Teilschäden auf die Prozessoreinheiten 31, 31', 31" aufzuteilen, wobei die nachfolgend beschriebenen Optimierungsschritte durchgeführt werden, um eine gleichmässige Verteilung der Berechnung der Teilschäden auf die Prozessoreinheiten 31, 31', 31" zu erzielen und die gesamte Rechenzeit gering zu halten.

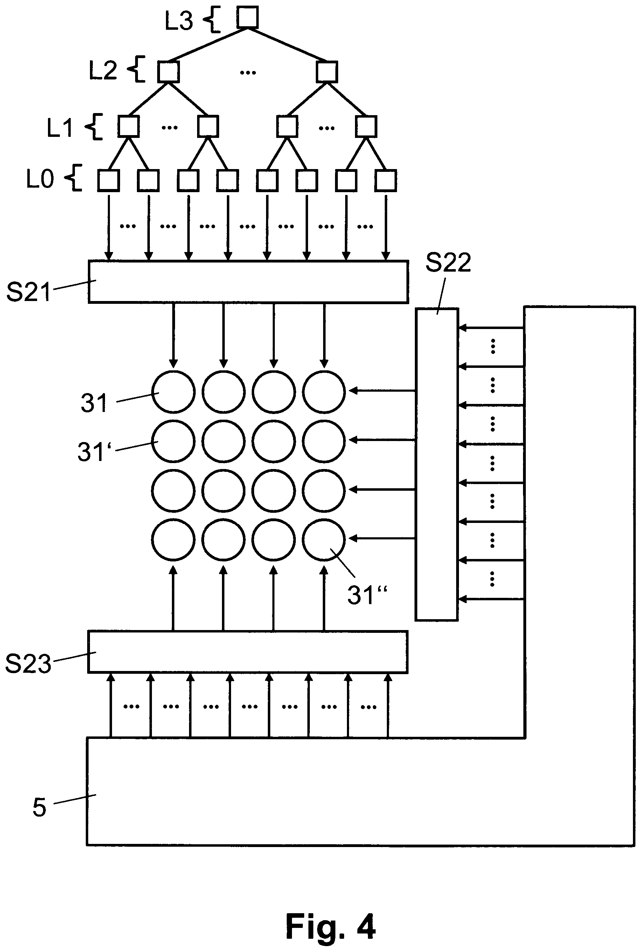

Wenn die für das Portfolio relevanten Schadenempfindlichkeitsfunktionen nicht alle im Cache 312 der Prozessoreinheiten 31, 31', 31" gespeichert werden können, oder wenn mehr als ein bestimmter Anteil des Caches dafür benötigt würde, werden die Schadenempfindlichkeitsfunktionen in verschiedenen Schadenempfindlichkeitssätzen zumindest teilweise auf die Prozessoreinheiten 31, 31', 31" aufgeteilt. Die Aufteilung der Schadenempfindlichkeitsfunktionen wird in den Instruktionsdaten vorgenommen oder erfolgt in einem separaten Schritt durch Übertragung der Schadenempfindlichkeitsfunktionen zur Speicherung im lokalen Cache 312 an die Prozessoreinheiten 31, 31', 31". Da die Schadenempfindlichkeitsfunktionen für ein versichertes Objekt jeweils abhängig von seinem Objektschlüssel bestimmt werden, werden die Angaben über die versicherten Objekte, insbesondere die in der Tabelle 1 dargestellte Zuordnung des Objektschlüssels zum Deckungsumfangswert, entsprechend der Aufteilung der Schadenempfindlichkeitsfunktionen in die verschiedenen Instruktionsdaten für die Prozessoreinheiten 31, 31', 31" eingefügt. Das heisst die versicherten Objekte werden, wie in der Figur 4 schematisch durch Schritt S21 illustriert wird, jeweils einer Prozessoreinheit 31, 31', 31" zugeteilt, in welcher die Schadenempfindlichkeitsfunktion für das versicherte Objekt im Cache 312 gespeichert ist. Dabei erfolgt die Aufteilung der Schadenempfindlichkeitsfunktionen respektive der versicherten Objekte so, dass jeder Prozessoreinheit 31, 31', 31" eine möglichst gleichmässige Anzahl Objekte zugewiesen wird, um eine möglichst gleichmässig auf die Prozessoreinheiten 31, 31', 31" verteilte Berechnung der Teilschäden zu erzielen.

Wenn die für das Portfolio L3 relevanten Schadenempfindlichkeitsfunktionen alle im Cache 312 der Prozessoreinheiten 31, 31', 31" gespeichert werden können, oder wenn für die Verarbeitung der verschiedenen Schadenempfindlichkeitssätze jeweils mehrere Prozessoreinheiten 31, 31', 31" verfügbar sind, dann werden unterschiedliche Teilbereiche der Naturkatastrophenereignisse 5 auf die Prozessoreinheiten 31, 31', 31" aufgeteilt, wie in der Figur 4 schematisch durch Schritt S22 illustriert wird. Die Aufteilung der Naturkatastrophenereignisse wird in den Instruktionsdaten vorgenommen oder erfolgt in einem separaten Schritt durch Übertragung der Naturkatastrophenereignisse zur Speicherung im lokalen Cache an die Prozessoreinheiten 31, 31', 31". In den Instruktionsdaten werden die Daten der selektierten Naturkatastrophenereignisse oder zumindest deren Ereignisidentifizierungen eingefügt. Die Aufteilung der Naturkatastrophenereignisse auf die Prozessoreinheiten 31, 31', 31" erfolgt wiederum so, dass eine möglichst gleichmässig auf die Prozessoreinheiten 31, 31', 31" verteilte Berechnung der Teilschäden erzielt wird. In einer Ausführungsvariante werden in den Instruktionsdaten keine Angaben zu den Naturkatastrophenereignissen an die Prozessoreinheiten 31, 31', 31" übermittelt, sondern die Steuermodule 311 der Prozessoreinheiten 31, 31', 31" fordern, jeweils nach der Berechnung der Teilschäden, die durch ein Naturkatastrophenereignis an den zugewiesenen versicherten Objekten angerichtet werden, von der Datenbank 2 die Daten zu einem weiteren Naturkatastrophenereignis an, das noch nicht berücksichtigt wurde. Die Daten eines Naturkatastrophenereignisses, die von einer Prozessoreinheit 31, 31', 31" bezogen wurden, werden in der Datenbank 2 entsprechend als bearbeitet markiert. Wenn den Prozessoreinheiten 31, 31', 31" unterschiedliche Gruppen von versicherten Objekten zugeteilt sind, wird dabei berücksichtigt, für welche Gruppe ein Naturkatastrophenereignis bereits berücksichtigt wurde. In diesen Ausführungsvarianten erfolgt die Aufteilung der Naturkatastrophenereignisse auf die Prozessoreinheiten 31, 31', 31" somit dynamisch.

Wenn verschiedenen Risikogebieten unterschiedliche Naturkatastrophenereignisse zugeordnet sind, das heisst, wenn mindestens ein Teil der Naturkatastrophenereignisse für gewisse Risikogebiete nicht relevant ist, dann werden die Instruktionsdaten so bereitgestellt, dass den Prozessoreinheiten 31, 31', 31" möglichst keine Kombinationen von versicherten Objekten mit diesbezüglich irrelevanten Naturkatastrophenereignissen zugewiesen werden. Insbesondere, wenn die Schadenempfindlichkeitsfunktionen und in entsprechender Weise die zu bearbeitenden versicherten Objekte auf die Prozessoreinheiten 31, 31', 31" aufgeteilt werden, werden den Prozessoreinheiten 31, 31', 31" jeweils nur diejenigen Naturkatastrophenereignisse 5 zugewiesen, die für die den betreffenden Prozessoreinheiten 31, 31', 31" zugewiesenen versicherten Objekte relevant sind, wie in der Figur 4 schematisch durch Schritt S23 illustriert wird. Die Instruktionsdaten werden für Prozessoreinheiten 31, 31', 31" mit Angaben zu versicherten Objekten bereitgestellt, die einem geografischen Risikogebiet zugeordnet sind, für das in der betreffenden Prozessoreinheit 31, 31', 31" mindestens ein relevantes Naturkatastrophenereignis zugeteilt ist. Wenn die Angaben zu den Naturkatastrophenereignissen in den Instruktionsdaten an die Prozessoreinheiten 31, 31', 31" übermittelt werden, werden die Instruktionsdaten für die Prozessoreinheiten 31, 31', 31" mit Angaben zu Naturkatastrophenereignissen bereitgestellt, welche für mindestens ein versichertes Objekt relevant sind, das der betreffenden Prozessoreinheit 31, 31', 31" zugeteilt ist, d.h. Naturkatastrophenereignisse, welche einem Risikogebiet zugeordnet sind, für das der betreffenden Prozessoreinheit 31, 31', 31" mindestens ein versichertes Objekt zugeteilt ist. Bei den Ausführungsvarianten mit dynamischer Aufteilung der Naturkatastrophenereignisse erfolgt die Wahl des nächsten Naturkatastrophenereignisses in der Datenbank 2 aus einer Gruppe von Naturkatastrophenereignissen, die für versicherten Objekte relevant sind, die der anfragenden Prozessoreinheit 31, 31', 31" zugeteilt sind.

Vorzugsweise werden die Daten zu den lokal in den Prozessoreinheiten 31, 31', 31" benötigten Naturkatastrophenereignissen jeweils in einem lokalen Speicher, insbesondere im Cache 312 der betreffenden Prozessoreinheit 31, 31', 31" gespeichert. Die versicherten Objekte werden jeweils einer Prozessoreinheit 31, 31', 31" zugewiesen, welche mindestens ein für das betreffende Objekt relevantes Naturkatastrophenereignis im Cache 312 gespeichert hat. Die Instruktionsdaten werden also für die Prozessoreinheiten 31, 31', 31" mit Angaben zu versicherten Objekten bereitgestellt, für welche im lokalen Cache 312 der Prozessoreinheit 31, 31', 31" relevante Naturkatastrophenereignisse gespeichert sind. Daten zu Naturkatastrophenereignissen, die nicht in einem lokalen Datenspeicher verfügbar sind, müssen beispielsweise per Ereignisidentifizierung aus der zentralen Datenbank 2 bezogen werden.

Den oben beschriebenen Optimierungsschritten können abhängig von Erfahrungswerten hinsichtlich unterschiedlicher Portfoliogrössen, Anzahl respektive Zeitraum berücksichtigter Naturkatastrophenereignisse, Grösse der lokalen Caches und/oder Anzahl und Leistungsfähigkeit der zur Verfügung stehenden Prozessoreinheiten 31, 31', 31" Gewichtungsfaktoren oder Prioritätswerte zugewiesen werden, welche beispielsweise die Reihenfolge und/oder Anwendbarkeit der Optimierungsschritte beeinflussen, so dass für unterschiedliche Szenarien automatisch eine geeignete Aufteilung der Naturkatastrophenereignisse und der versicherten Objekte auf die Prozessoreinheiten 31, 31', 31" bestimmt wird.

Im Schritt S3 übermittelt der Instruktionsgenerator 12 die bereitgestellten Instruktionsdaten über das Kommunikationsnetz 4 an die betreffenden Prozessoreinheiten 31, 31', 31".

Im Schritt S4, berechnet das Steuermodul 311 in den Prozessoreinheiten 31, 31', 31" jeweils auf der Basis der entgegengenommenen Instruktionsdaten die Teilschäden respektive Teilschadenangaben für die zugewiesenen versicherten Objekte. Für die Berechnung der Teilschäden wird jeweils auf der Basis des Objektschlüssels die Schadenempfindlichkeitsfunktion für das betreffende versicherte Objekt bestimmt. Für jedes zugewiesene versicherte Objekt werden die Teilschäden berechnet, die sich je nach Ausführungsvariante aus den Naturkatastrophenereignissen ergeben, die im Cache 312 oder einem anderen lokalen Datenspeicher gespeichert sind, die in den Instruktionsdaten übermittelt werden, die auf Grund von Ereignisidentifizierungen in den Instruktionsdaten bestimmt und beispielsweise explizit einem oder mehreren versicherten Objekten zugeordnet sind, und/oder die ohne vordefinierte Zuordnung dynamisch aus der Datenbank 2 bezogen werden. Das Steuermodul 311 aggregiert die Teilschadenangaben für die versicherten Objekte, für die durch Risikogebiet und Risikotyp definierten Risikoeinheiten L1 und/oder für die Risikogruppen L2. Die aggregierten Teilschadenangaben werden in der Datenbank 2 gespeichert.

Im Schritt S5 berechnet das Schadenberechnungsmodul 13 aus den aggregierten Teilschadenangaben den für das gesamte Portfolio L3 erwarteten Schaden.

## Patentansprüche

1. Computerbasiertes System (1) mit mehreren, vernetzten Prozessoreinheiten (31, 31', 31") zur auf die mehreren Prozessoreinheiten (31, 31', 31") verteilten Berechnung von zu erwarteten Schäden durch Naturkatastrophenereignisse an einer Vielzahl von versicherten Objekten eines Portfolios (L3), umfassend:
eine Datenbank (2) und eine Koordinationseinheit (10), die über ein Telekommunikationsnetzwerk (4) mit den mehrere Prozessoreinheiten (31, 31', 31") verbunden ist, wobei die Datenbank (2) historische oder simulierte Naturkatastrophenereignisse für einen definierten Zeitraum von mindestens mehreren hundert Jahren umfasst, und wobei die Naturkatastrophenereignisse mindestens eine Ereignisidentifizierung, ein Ereignistyp, ein Ereignisort, eine Ereignisintensität und eine Ereignisfrequenz umfassen,
ein Datenstrukturierungsmodul (11) zum Zuordnen der versicherten Objekte zu einem Risikotyp und geografischen Risikogebiet einer Risikogruppe (L2), wobei die Datenbank (2) zu jedem der Vielzahl von Objekten ein Objektschlüssel mit mindestens einer Risikogruppe (L2), einer Risikoeinheit und einem Deckungsumfangstyp zugeordnet abgespeichert umfasst,
eine Vielzahl von definierten, ausführbaren Schadensempfindlichkeitsfunktionen umfassend in der Datenbank (2), wobei eine Schadensempfindlichkeitsfunktion in Abhängigkeit von der dem Objektschlüssel zugeordneten Risikogruppe, Risikogebiet, Risikotyp und Deckungsumfangstyp mittels der Datenbank (2) bestimmt wird und wobei mittels der bestimmten Schadensempfindlichkeitsfunktion basierend auf einer Ereignisstärke oder -Intensität am Ort eines Objektes ein Schadensgrad für ein gespeichertes Naturkatastrophenereignisse für einen Ereignistyp bestimmt wird,
ein Instruktionsgenerator (12)
- zum Bereitstellen und Übermitteln von verschiedenen Instruktionsdaten für jeweils eine der Prozessoreinheiten (31, 31', 31"), welche Instruktionsdaten Angaben zu mindestens einem Teil der versicherten Objekte und deren Zuordnung zu einem Risikotyp und geografischen Risikogebiet einer Risikogruppe (L2) umfassen, wobei die Instruktionsdaten für die Prozessoreinheiten (31, 31', 31") jeweils für unterschiedliche auf die Prozessoreinheiten (31, 31', 31") aufgeteilte Teilbereiche der Naturkatastrophenereignisse bereitgestellt werden, welche verschiedene Risikogebiete zuordenbar sind, so dass die Instruktionsdaten für jeweils eine der Prozessoreinheiten (31, 31', 31") mit Angaben zu Naturkatastrophenereignissen bereitgestellt werden, welche einem Risikogebiet zugeordnet sind, für das der betreffenden Prozessoreinheit (31, 31', 31") mindestens ein versichertes Objekt zugeteilt ist,
- zum Aufteilen und Übertragen der Schadensempfindlichkeitsfunktionen zur Speicherung im lokalen Cache (312) der Prozessoreinheiten (31, 31', 31") für die zur Berechnung von Teilschäden auf den Prozessoreinheiten (31, 31', 31"), wobei in den lokalen Caches der Prozessoreinheiten jeweils mindestens eine Schadensempfindlichkeitsfunktion gespeichert wird, wobei die Instruktionsdaten für die Prozessoreinheiten bereitgestellt werden, deren Zuordnungen zu einem Risikotyp und geographischen Risikogebiet jeweils eine im lokalen Cache gespeicherte Schadenempfindlichkeitsfunktion bestimmen,
- zum Zuweisen jeder Prozessoreinheit (31, 31', 31") einer möglichst gleichmässige Anzahl Objekte, wobei die Schadensempfindlichkeitsfunktion und Objekte auf die Prozessoreinheiten (31, 31', 31") verteilt werden, und wobei einer Prozessoreinheit (31, 31', 31") nur diejenigen versicherten Objekte zugeordnete werden, für die im lokalen Cache der betreffenden Prozessoreinheit (31, 31', 31") eine Schadensempfindlichkeitsfunktion gespeichert ist,
Steuermodule (311) zum Steuern der Prozessoreinheiten (31, 31', 31") derart, dass die Prozessoreinheiten (31, 31', 31") jeweils basierend auf ihnen zugewiesenen Instruktionsdaten und basierend auf einer durch die Zuordnung der versicherten Objekte zu einem Risikotyp und geografischen Risikogebiet bestimmten Schadenempfindlichkeitsfunktion Teilschadenangaben berechnen für einen erwarteten Schaden durch eines der Naturkatastrophenereignisse an einem der versicherten Objekte, wobei das Steuermodul (311) die Teilschadenangaben für die versicherten Objekte, für die durch Risikogebiet und Risikotyp definierten Risikoeinheiten und für die Risikogruppen aggregiert und die aggregierten Teilschadenangaben in der Datenbank (2) speichert, und
ein Schadenberechnungsmodul (13) zum Bestimmen eines erwarteten Schadens für das gesamte Portfolio (L3) basierend auf den aggregierten Teilschadenangaben der Datenbank (2).

2. System (1) nach Anspruch 1, wobei in den Prozessoreinheiten (31, 31', 31") jeweils mindestens eine Schadenempfindlichkeitsfunktion in einem lokalen Cache (312) gespeichert ist, und dass der Instruktionsgenerator ( 12) eingerichtet ist, die Instruktionsdaten für jeweils eine der Prozessoreinheiten (31, 31', 31") mit Angaben zu versicherten Objekten bereitzustellen, deren Zuordnungen zu einem Risikotyp und geografischen Risikogebiet jeweils eine im lokalen Cache (312) gespeicherte Schadenempfindlichkeitsfunktion bestimmen.

3. System (1) nach einem der Ansprüche 1 oder 2, wobei der Instruktionsgenerator (12) eingerichtet ist, die Instruktionsdaten für die Prozessoreinheiten (31, 31', 31") jeweils für unterschiedliche auf die Prozessoreinheiten (31, 31', 31") aufgeteilte Teilbereiche der Naturkatastrophenereignisse bereitzustellen.

4. System (1) nach einem der Ansprüche 1 bis 3, wobei zum Teil verschiedenen Risikogebieten unterschiedliche Naturkatastrophenereignisse zugeordnet sind, und dass der Instruktionsgenerator (12) eingerichtet ist, die Instruktionsdaten für jeweils eine der Prozessoreinheiten (31, 31', 31") mit Angaben zu versicherten Objekten eines geografischen Risikogebiets bereitzustellen, für das in der betreffenden Prozessoreinheit (31, 31', 31") mindestens ein zugeordnetes Naturkatastrophenereignis zugeteilt ist.

5. System (1) nach einem der Ansprüche 1 bis 4, wobei zum Teil verschiedenen Risikogebieten unterschiedliche Naturkatastrophenereignisse zugeordnet sind, und dass der Instruktionsgenerator (12) eingerichtet ist, die Instruktionsdaten für jeweils eine der Prozessoreinheiten (31, 31', 31") mit Angaben zu Naturkatastrophenereignissen bereitzustellen, welche einem Risikogebiet zugeordnet sind, für das der betreffenden Prozessoreinheit (31, 31', 31") mindestens ein versichertes Objekt zugeteilt ist.

6. System (1) nach einem der Ansprüche 1 bis 5, wobei dass in den Prozessoreinheiten (31, 31', 31") jeweils mindestens ein Teil der Naturkatastrophenereignisse in einem lokalen Cache (312) gespeichert ist, und dass der Instruktionsgenerator (12) eingerichtet ist, die Instruktionsdaten für jeweils eine der Prozessoreinheiten (31, 31', 31") mit Angaben zu versicherten Objekten bereitzustellen, für welche Teilschadenangaben mit im lokalen Cache (312) der Prozessoreinheit (31, 31', 31") gespeicherten Naturkatastrophenereignissen berechnet werden sollen.

7. System ( 1) nach einem der Ansprüche bis 6, wobei die Instruktionsdaten Angaben für einen Satz von versicherten Objekten des Portfolios (L3) umfassen, und dass die Steuermodule (311) eingerichtet sind, Daten des für die Teilschadenangabe verwendeten Naturkatastrophenereignisses aus einem Datenspeieher zu beziehen.

8. System (1) nach einem der Ansprüche 1 bis 7, wobei das Datenstrukturierungsmodul (11) eingerichtet ist, die versicherten Objekte jeweils in einer hierarchischen Datenstruktur mit den absteigend angeführten Hierarchiestufen Portfolio (L3), Risikogruppe (L2), geografisches Risikogebiet und Risikotyp, sowie Deckungsumfangstyp anzuordnen, und dass die Steuermodule (311) eingerichtet sind, die zu verwendende Schadenempfindlichkeitsfunktion auf Grund der Risikogruppe (L2), des geografischen Risikogebiets und Risikotyps, und des Deckungsumfangstyps zu bestimmen.

9. System (1) nach einem der Ansprüche bis 8, wobei der Instruktionsgenerator (12) eingerichtet ist, Instruktionsdaten bereitzustellen, welche Angaben zur Identifizierung einer Vielzahl von Naturkatastrophenereignissen und Angaben zur Identifizierung des Portfolios (L3), der Risikogruppe (L2) und des Risikotyps und geografischen Risikogebiets eines versicherten Objekts umfassen, und dass die Steuermodule (311) eingerichtet sind, berechnete Teilschadenangaben zugeordnet zu einem versicherten Objekt zu speichern.

10. System (1) nach einem der Ansprüche 1 bis 9, wobei die Prozessoreinheiten (31, 31', 31") und der Instruktionsgenerator (12) jeweils auf einem separaten Server (3, 3', 3") angeordnet sind, dass die Steuermodule (311) jeweils auf dem Server (3, 3', 3") mit der zu steuernden Prozessoreinheit (31, 31', 31") angeordnet sind, dass der Instruktionsgenerator (12) eingerichtet ist, die Instruktionsdaten über ein Kommunikationsnetz (4) an die betreffenden Prozessoreinheiten (31, 31', 31") zu übermitteln, dass das System (1) eine Datenbank (2) mit darin gespeicherten Daten der Naturkatastrophenereignisse (5) umfasst, dass die Steuermodule (311) eingerichtet sind, die Daten der Naturkatastrophenereignisse (5) aus der Datenbank (2) zu beziehen, wenn sie nicht in einem lokalen Cache (312) der Prozessoreinheit (31, 31', 31 ") gespeichert sind, dass die Angaben zu den versicherten Objekten jeweils einen Deckungsumfangswert umfassen, dass die Steuermodule (311) eingerichtet sind, die Teilschadenangaben für ein versichertes Objekt basierend auf seinem Deckungsumfangswert, auf der für das versicherte Objekt bestimmten Schadenempfindlichkeitsfunktion und basierend auf den Daten eines in den Instruktionsdaten angegebenen Naturkatastrophenereignisses zu berechnen, und dass die Steuermodule (311) eingerichtet sind, die berechneten Teilschadenangaben in der Datenbank (2) zu speichern.

11. Computerimplementiertes Verfahren für mehrere, vernetzte Prozessoreinheiten (31, 31', 31") zur auf die mehreren Prozessoreinheiten (31, 31', 31") verteilten Berechnung von erwarteten Schäden durch Naturkatastrophenereignisse an einer Vielzahl von versicherten Objekten eines Portfolios (L3), umfassend:
Verbinden der mehreren Prozessoreinheiten (31, 31', 31") mit einer zentralen Datenbank (2) und einer Koordinationseinheit (10) über ein Telekommunikationsnetzwerk (4), wobei die Datenbank (2) historische oder simulierte Naturkatastrophenereignisse für einen definierten Zeitraum von mindestens mehreren hundert Jahren umfasst, und wobei die Naturkatastrophenereignisse mindestens eine Ereignisidentifizierung, ein Ereignistyp, ein Ereignisort, eine Ereignisintensität und eine Ereignisfrequenz umfassen,
Zuordnen (S1) der Objekte des Portfolios mittels eines Datenstrukturierungsmodul (11) zu einem Risikotyp und geografischen Risikogebiet einer Risikogruppe (L2), wobei in der die Datenbank (2) zu jedem der Vielzahl von Objekten ein Objektschlüssel mit mindestens einer Risikogruppe (L2), einer Risikoeinheit und einem Deckungsumfangstyp zugeordnet abgespeichert wird,
Definieren einer Vielzahl von ausführbaren Schadensempfindlichkeitsfunktionen umfassend in der Datenbank (2), wobei in Abhängigkeit von der dem Objektschlüsselzugeordneten Risikogruppe, Risikogebiet, Risikotyp und Deckungsumfangstyp eine Schadensempfindlichkeitsfunktion mittels der Datenbank bestimmt wird und wobei mittels der bestimmten Schadensempfindlichkeitsfunktion basierend auf einer Ereignisstärke oder -Intensität am Ort eines Objektes ein Schadensgrad für ein gespeichertes Naturkatastrophenereignisse für einen Ereignistyp bestimmt wird,
Bereitstellen (S2) und Übermitteln von verschiedenen Instruktionsdaten für jeweils eine von den mehreren Prozessoreinheiten (31, 31', 31") mittels des Instruktionsgenerators (12), welche Instruktionsdaten Angaben zu mindestens einem Teil der versicherten Objekte und deren Zuordnung zu einem Risikotyp und geografischen Risikogebiet einer Risikogruppe (L2) umfassen, wobei die Instruktionsdaten für die Prozessoreinheiten jeweils für unterschiedliche auf die Prozessoreinheiten aufgeteilte Teilbereiche der Naturkatastrophenereignisse bereitgestellt werden, welche verschiedene Risikogebiete zuordenbar zugeordnet sind, so dass die Instruktionsdaten für jeweils eine der Prozessoreinheiten mit Angaben zu Naturkatastrophenereignissen bereitgestellt werden, welche einem Risikogebiet zugeordnet sind, für das der betreffenden Prozessoreinheit mindestens ein versichertes Objekt zugeteilt ist,
Aufteilen und Übertragen der Schadensempfindlichkeitsfunktionen zur Speicherung im lokalen Cache (312) der Prozessoreinheiten (31, 31', 31") für die Berechnung von Teilschäden auf den Prozessoreinheiten (31, 31', 31"), wobei in den lokalen Caches der Prozessoreinheiten jeweils mindestens eine Schadensempfindlichkeitsfunktion gespeichert wird, wobei die Instruktionsdaten für die Prozessoreinheiten bereitgestellt werden, deren Zuordnungen zu einem Risikotyp und geographischen Risikogebiet jeweils eine im lokalen Cache gespeicherte Schadenempfindlichkeitsfunktion bestimmen,
Zuweisen jeder Prozessoreinheit (31, 31', 31") einer möglichst gleichmässige Anzahl Objekte, wobei die Schadensempfindlichkeitsfunktion und Objekte auf die Prozessoreinheiten (31, 31', 31") verteilt werden, und wobei einer Prozessoreinheit (31, 31', 31") nur diejenigen versicherten Objekte zugeordnete werden, für die im lokalen Cache der betreffenden Prozessoreinheit (31, 31', 31") eine Schadensempfindlichkeitsfunktion gespeichert ist,
Steuern der Prozessoreinheiten (31, 31', 31") jeweils durch Steuermodule (311) derart, dass die Prozessoreinheiten (31, 31', 31") jeweils basierend auf der in den für sie bereitgestellten Instruktionsdaten enthaltenen Zuordnung der versicherten Objekte zu einem Risikotyp und geografischen Risikogebiet eine zu verwendende Schadenempfindlichkeitsfunktion bestimmen, wobei jeweils basierend auf den für sie bereitgestellten Instruktionsdaten und basierend auf der bestimmten Schadenempfindlichkeitsfunktion Teilschadenangaben für den erwarteten Schaden durch eines der Naturkatastrophenereignisse an einem der versicherten Objekte berechnet (S4) werden, und wobei das entsprechende Steuermodul (331) die Teilschadenangaben für die durch Risikogebiet und Risikotyp definierten Risikoeinheiten (L1) und/oder Risikogruppen (L2) aggregiert und als aggregierte Teilschadensangaben in der Datenbank (2) speichert,
Bestimmen eines erwarteten Schadens (S5) für das gesamte Portfolio (L3) mittels des Schadenberechnungsmoduls (13) basierend auf den aggregierten Teilschadenangaben der Datenbank (2).

12. Verfahren nach Anspruch 11, wobei in lokalen Caches (312) der Prozessoreinheiten (31, 31', 31") jeweils mindestens eine Schadenempfindlichkeitsfunktion gespeichert wird, und dass die Instruktionsdaten für jeweils eine der Prozessoreinheiten (31, 31', 31") mit Angaben bereitgestellt werden zu versicherten Objekten, deren Zuordnungen zu einem Risikotyp und geografischen Risikogebiet jeweils eine im lokalen Cache (312) gespeicherte Schadenempfindlichkeitsfunktion bestimmen.

13. Verfahren nach einem der Ansprüche 11 oder 12, wobei dass die Instruktionsdaten für die Prozessoreinheiten (31, 31', 31") jeweils für unterschiedliche auf die Prozessoreinheiten (31, 31', 31") aufgeteilte Teilbereiche der Naturkatastrophenereignisse bereitgestellt werden.

14. Verfahren nach einem der Ansprüche 11 bis 13, wobei zum Teil verschiedenen Risikogebieten unterschiedliche Naturkatastrophenereignisse zugeordnet werden, und dass die Instruktionsdaten für jeweils eine der Prozessoreinheiten (31, 31', 31") mit Angaben zu versicherten Objekten eines geografischen Risikogebiets bereitgestellt werden, für das in der betreffenden Prozessoreinheit mindestens ein zugeordnetes Naturkatastrophenereignis zugeteilt ist.

15. Verfahren nach einem der Ansprüche 1 bis 14, wobei zum Teil verschiedenen Risikogebieten unterschiedliche Naturkatastrophenereignisse zugeordnet werden, und dass die Instruktionsdaten für jeweils eine der Prozessoreinheiten (31, 31', 31") mit Angaben zu Naturkatastrophenereignissen bereitgestellt werden, welche einem Risikogebiet zugeordnet sind, für das der betreffenden Prozessoreinheit (31, 31', 31") mindestens ein versichertes Objekt zugeteilt ist.

16. Verfahren nach einem der Ansprüche 11 bis 15, wobei in den Prozessoreinheiten (31, 31', 31") jeweils mindestens ein Teil der Naturkatastrophenereignisse in einem lokalen Cache (312) gespeichert wird, und dass die Instruktionsdaten für jeweils eine der Prozessoreinheiten (31, 31', 31") mit Angaben zu versicherten Objekten bereitgestellt werden, für welche Teilschadenangaben mit im lokalen Cache (312) der Prozessoreinheit (31, 31', 31") gespeicherten Naturkatastrophenereignissen berechnet werden sollen.

17. Verfahren nach einem der Ansprüche 1 bis 16, wobei die Instruktionsdaten Angaben für einen Satz von versicherten Objekten des Portfolios (L2) umfassen, und dass Daten des für die Teilschadenangabe verwendeten Naturkatastrophenereignisses durch die Prozessoreinheit aus einem Datenspeicher bezogen werden.

18. Verfahren nach einem der Ansprüche 1 bis 17, wobei die versicherten Objekte jeweils in einer hierarchischen Datenstruktur mit der absteigend angeführten Hierarchiestufen Portfolio (L3), Risikogruppe (L2), geografisches Risikogebiet und Risikotyp, sowie Deckungsumfangstyp angeordnet werden, und dass die zu verwendende Schadenempfindlichkeitsfunktion auf Grund der Risikogruppe (L2), des geografischen Risikogebiets und Risikotyps, und des Deckungsumfangstyps bestimmt wird.

19. Verfahren nach einem der Ansprüche 11 bis 18, wobei Instruktionsdaten bereitgestellt (S2) werden, welche Angaben zur Identifizierung einer Vielzahl von Naturkatastrophenereignissen und Angaben zur Identifizierung des Portfolios (L3), der Risikogruppe (L2) und des Risikotyps und geografischen Risikogebiets eines versicherten Objekts umfassen, und dass berechnete Teilschadenangaben zugeordnet zu einem versicherten Objekt gespeichert werden.

20. Verfahren nach einem der Ansprüche 11 bis 19, wobei die Prozessoreinheiten (31, 31', 31") jeweils auf einem separaten Server (3, 3', 3") angeordnet werden, dass die Instruktionsdaten über ein Kommunikationsnetz (4) an die betreffenden Prozessoreinheiten (31, 31', 31") übermittelt werden, dass Daten der Naturkatastrophenereignisse in einer Datenbank (2) gespeichert werden, dass die Prozessoreinheiten (31, 31', 31") die Daten der Naturkatastrophenereignisse aus der Datenbank (2) beziehen, wenn sie nicht in einem lokalen Cache (312) der Prozessoreinheit (31, 31', 31") gespeichert sind, dass die Angaben zu den versicherten Objekten jeweils einen Deckungsumfangswert umfassen, dass die Teilschadenangaben für ein versichertes Objekt basierend auf seinem Deckungsumfangswert, auf der für das versicherte Objekt bestimmten Schadenempfindlichkeitsfunktion und basierend auf den Daten eines in den Instruktionsdaten angegebenen Naturkatastrophenereignisses berechnet werden, und dass die berechneten Teilschadenangaben in der Datenbank (2) gespeichert werden.

## Claims

1. Computer-based system (1) with a plurality of networked processor units (31, 31', 31") for the calculation, distributed among the plurality of processor units (31, 31', 31"), of expected losses due to natural catastrophe events at a plurality of insured objects of a portfolio (L3), comprising:
a database (2) and a coordination unit (10), which is connected to the plurality of processor units (31, 31', 31") via a telecommunications network (4), wherein the database (2) comprises historical or simulated natural catastrophe events for a defined time period of at least several hundred years, and wherein the natural catastrophe events comprise at least one event identification, one event type, one event location, one event intensity and one event frequency,
a data structuring module (11) for assigning the insured objects to a risk type and geographical risk area of a risk group (L2), wherein the database (2) comprises an object key having at least one risk group (L2), one risk unit and one scope-of-coverage type stored assigned to each of the plurality of objects,
a plurality of feasible loss sensitivity functions defined comprehensively in the database (2), wherein a loss sensitivity function is determined by means of the database (2) depending on the risk group, risk area, risk type and scope-of-coverage type assigned to the object key, and wherein a degree of loss for a stored natural catastrophe event is determined for an event type by means of the determined loss sensitivity function based on an event strength or intensity at the location of an object,
an instruction generator (12)
- for providing and transmitting different instruction data for each one of the processor units (31, 31', 31"), which instruction data comprises information on at least one part of the insured objects and their assignment to a risk type and geographical risk area of a risk group (L2), wherein the instruction data for the processor units (31, 31',31") are in each case provided for different sub-areas of the natural catastrophe events divided among the processor units (31, 31', 31"), which sub-areas can be assigned to different risk areas, so that the instruction data is provided for each one of the processor units (31, 31', 31") with information on natural catastrophe events which are assigned to a risk area for which at least one insured object is allocated to the processor unit (31, 31', 31") concerned,
- for dividing and transmitting the loss sensitivity functions for storage in the local cache (312) of the processor units (31, 31', 31") for the partial loss calculation on the processor units (31, 31', 31"), at least one loss sensitivity function being stored in each of the local caches of the processor units, the instruction data being provided for the processor units, assignments of which to a risk type and geographical risk area each determine a loss sensitivity function stored in the local cache,
- for allotting each processor unit (31, 31', 31") as uniform a number of objects as possible, the loss sensitivity function and objects being distributed among the processor units (31, 31', 31"), and a processor unit (31, 31', 31") being assigned only those insured objects for which a loss sensitivity function is stored in the local cache of the processor unit (31, 31', 31") concerned,
control modules (311) for controlling the processor units (31, 31', 31") in such a way that, based on instruction data allotted to them and based on a loss sensitivity function determined by the assignment of the insured objects to a risk type and geographical risk area, the processor units (31, 31', 31") each calculate partial loss information for an expected loss caused by one of the natural catastrophe events at one of the insured objects, wherein the control module (311) aggregates the partial loss information for the insured objects, for the risk units defined by risk area and risk type and for the risk groups, and stores the aggregated partial loss information in the database (2), and
a loss calculation module (13) for determining an expected loss for the entire portfolio (L3) based on the aggregated partial loss information of the database (2).

2. System (1) according to claim 1, wherein at least one loss sensitivity function is stored in a local cache (312) in each of the processor units (31, 31', 31"), and in that the instruction generator (12) is set up to provide the instruction data for a respective one of the processor units (31, 31', 31") with information on insured objects, the assignments of which to a risk type and geographical risk area determine a respective loss sensitivity function stored in the local cache (312).

3. System (1) according to one of claims 1 or 2, wherein the instruction generator (12) is set up to provide the instruction data for the processor units (31, 31', 31") in each case for different sub-areas of the natural catastrophe events divided among the processor units (31, 31', 31").

4. System (1) according to one of claims 1 to 3, wherein different natural catastrophe events are assigned in part to different risk areas, and that the instruction generator (12) is set up to provide the instruction data for in each case one of the processor units (31, 31', 31") with information on insured objects of a geographical risk area for which at least one assigned natural catastrophe event is allocated in the processor unit (31, 31', 31") concerned.

5. System (1) according to one of claims 1 to 4, wherein different natural catastrophe events are assigned in part to different risk areas, and that the instruction generator (12) is set up to provide the instruction data for in each case one of the processor units (31, 31', 31") with information on natural catastrophe events, which are assigned to a risk area, for which at least one insured object is allocated to the processor unit (31, 31', 31") concerned.

6. System (1) according to one of claims 1 to 5, wherein at least one part of the natural catastrophe events is stored in a local cache (312) in each of the processor units (31, 31', 31"), and that the instruction generator (12) is set up to provide the instruction data for a respective one of the processor units (31, 31', 31") with information on insured objects,
for which partial loss information should be calculated with natural catastrophe events stored in the local cache (312) of the processor units (31, 31', 31").

7. System (1) according to one of claims 1 to 6, wherein the instruction data comprises information for a set of insured objects of the portfolio (L3), and that the control modules (311) are set up to obtain data of the natural catastrophe events used for the partial loss information from a data store.

8. System (1) according to one of claims 1 to 7, wherein the data structuring module (11) is set up to classify the insured objects in each case in a hierarchical data structure with the hierarchical levels, listed in descending of, portfolio (L3), of risk group (L2), geographical risk area and risk type, and scope-of-coverage type, and that the control modules (311) are set up to determine the loss sensitivity function to be used based on the risk group (L2), the geographical risk area and risk type, and of the scope-of-coverage type.

9. System (1) according to one of claims 1 to 8, wherein the instruction generator (12) is set up to provide instruction data comprising information for identifying a plurality of natural catastrophe events and information for identifying the portfolio (L3), the risk group (L2) and the risk type and geographical risk area of an insured object, and that the control modules (311) are set up to store calculated partial loss information assigned to an insured object.

10. System (1) according to one of claims 1 to 9, wherein the processor units (31, 31', 31") and the instruction generator (12) are each arranged on a separate server (3, 3', 3"), that the control modules (311) are each arranged on the server (3, 3', 3") with the processor unit (31, 31', 31") to be controlled, that the instruction generator (12) is set up to transmit the instruction data via a communication network (4) to the processor units (31, 31', 31") concerned, that the system (1) comprises a database (2) with data of the natural catastrophe events (5) stored therein, that the control modules (311) are set up to obtain the data of the natural catastrophe events (5) from the database (2) if they are not stored in a local cache (312) of the processor unit (31, 31', 31 "), that the information on the insured objects in each case comprises a scope-of-coverage value, that the control modules (311) are set up to calculate the partial loss information for an insured object on the basis of its scope-of-coverage value, on the basis of the loss sensitivity function determined for the insured object and on the basis of the data of a natural catastrophe event specified in the instruction data, and that the control modules (311) are set up to store the calculated partial loss information in the database (2).

11. Computer-implement method for a plurality of networked processor units (31, 31', 31") for the calculation, distributed over the plurality of processor units (31, 31', 31"), of expected losses due to natural catastrophe events at a plurality of insured objects of a portfolio (L3), comprising:
connecting the plurality of the processor units (31, 31', 31") to a central database (2) and a coordination unit (10) via a telecommunications network (4), wherein the database (2) comprises historical or simulated natural catastrophe events for a defined time period of at least several hundred years, and wherein the natural catastrophe events comprise at least one event identification, one event type, one event location, one event intensity and one event frequency,
assigning (S1) the objects of the portfolio by means of the data structuring module (11) to a risk type and geographical risk area of a risk group (L2), wherein an object key having at least one risk group (L2), one risk unit and one scope-of-coverage type is stored in the database (2) assigned to each of the plurality of objects,
defining a plurality of feasible loss sensitivity functions comprehensively in the database (2), wherein a loss sensitivity function is determined by means of the database (2) depending on the risk group, risk area, risk type and scope-of-coverage type assigned to the object key, and wherein a degree of loss for a stored natural catastrophe event is determined for an event type by means of the determined loss sensitivity function based on an event strength or intensity at the location of an object,
providing (S2) and transmitting different instruction data for each one of the multiple processor units (31, 31', 31") by means of the instruction generator (12), which instruction data comprises information on at least one part of the insured objects and the assignment thereof to a risk type and geographical risk area of a risk group (L2), wherein the instruction data for the processor units are in each case provided for different sub-areas of the natural catastrophe events divided among the processor units, which sub-areas can be assigned to different risk areas, so that the instruction data is provided for in each case one of the processor units with information on natural catastrophe events which are assigned to a risk area for which at least one insured object is allocated to the processor unit concerned,
dividing and transmitting the loss sensitivity functions for storage in the local cache (312) of the processor units (31, 31', 31") for the partial loss calculation among the processor units (31, 31', 31"), at least one loss sensitivity function being stored in each of the local caches of the processor units, the instruction data being provided for the processor units, the assignments of which to a risk type and geographical risk area each determine a loss sensitivity function stored in the local cache,
allotting each processor unit (31, 31', 31") as uniform a number of objects as possible, the loss sensitivity function and objects being distributed among the processor units (31, 31', 31"), and a processor unit (31, 31', 31") being assigned only those insured objects for which a loss sensitivity function is stored in the local cache of the processor unit (31, 31', 31") concerned,
controlling the processor units (31, 31', 31") in each case by control modules (311) in such a way that the processor units (31, 31', 31") each determine a loss sensitivity function to be used on the basis of the assignment, contained in the instruction data provided for them, of the insured objects to a risk type and geographical risk area, wherein in each case, based on the instruction data provided for them and based on the determined loss sensitivity function, partial loss information is calculated (S4) for the expected loss caused by one of the natural catastrophe events at one of the insured objects, and wherein the corresponding control module (331) aggregates the partial loss information for the risk units (L1) and/or risk groups (L2) defined by risk area and risk type and stores it as aggregated partial loss information in the database (2),
determining an expected loss (S5) for the entire portfolio (L3) by means of the loss calculation module (13) based on the aggregated partial loss information of the database (2).

12. Method according to claim 11, wherein at least one loss sensitivity function is stored in local caches (312) in each of the processor units (31, 31', 31"), and that the instruction data for each one of the processor units (31, 31', 31") is provided with information on insured objects, the assignments of which to a risk type and geographical risk area in each case determine a loss sensitivity function stored in the local cache (312).

13. Method according to one of claims 11 or 12, wherein the instruction data for the processor units (31, 31', 31") is provided in each case for different sub-areas of the natural catastrophe events divided among the processor units (31, 31', 31").

14. Method according to one of claims 11 to 13, wherein different natural catastrophe events are assigned in part to different risk areas, and that the instruction data for each one of the processor units (31, 31', 31") is provided with information on insured objects of a geographical risk area, for which at least one assigned natural catastrophe event is allocated in the processor unit concerned.

15. Method according to one of claims 11 to 14, wherein different natural catastrophe events are assigned in part to different risk areas, and that the instruction data for each one of the processor units (31, 31', 31") is provided with information on natural catastrophe events, which are assigned to a risk area, for which at least one insured object is allocated to the processor unit (31, 31', 31") concerned.

16. Method according to one of claims 11 to 15, wherein at least one part of the natural catastrophe events is stored in a local cache (312) in each of the processor units (31, 31', 31"), and that the instruction data for each one of the processor units (31, 31', 31") is provided with information on insured objects, for which partial loss information should be calculated with natural catastrophe events stored in the local cache (312) of the processor unit (31, 31', 31").

17. Method according to one of claims 11 to 16, wherein the instruction data comprises information for a set of insured objects of the portfolio (L2), and that data of the natural catastrophe events used for the partial loss information is obtained by the processor unit from a data store.

18. Method according to one of claims 11 to 17, wherein the data structuring module is set up to classify the insured objects in each case in a hierarchical data structure with the hierarchical levels, listed in descending of, portfolio (L3), of risk group (L2), geographical risk area and risk type, and scope-of-coverage type, and that the loss sensitivity function to be used based on the risk group (L2), the geographical risk area and risk type, and of the scope-of-coverage type.

19. Method according to one of claims 11 to 18, wherein instruction data is provided (S2), which comprises information for identifying a plurality of natural catastrophe events and information for identifying the portfolio (L3), the risk group (L2) and the risk type and geographical risk area of an insured object, and that calculated partial loss information assigned to an insured object is stored.

20. Method according to one of claims 11 to 19, wherein the processor units (31, 31', 31") are each arranged on a separate server (3, 3', 3"), that the instruction data is transmitted to the processor units (31, 31', 31") concerned via a communication network (4), that data of the natural catastrophe events is stored in a database (2), that the processor units (31, 31', 31") obtain the data of the natural catastrophe events from the database (2) if they are not stored in a local cache (312) of the processor unit (31, 31', 31"), that the information on the insured objects in each case comprises a scope-of-coverage value, that the partial loss information for an insured object is calculated on the basis of its scope-of-coverage value, on the basis of the loss sensitivity function determined for the insured object and on the basis of the data of a natural catastrophe event specified in the instruction data, and that the calculated partial loss information is stored in the database (2).

## Revendications

1. Système informatique (1) comportant plusieurs unités à processeur (31, 31', 31") en réseau pour calculer, en répartition sur lesdites plusieurs unités à processeur (31, 31', 31"), des dommages attendus résultant de catastrophes naturelles sur une pluralité d'objets assurés dans un portefeuille (L3), comprenant :
une base de données (2) et une unité de coordination (10) connectée auxdites plusieurs unités à processeur (31, 31', 31 ") par le biais d'un réseau de télécommunications (4), ladite base de données (2) contenant des événements de catastrophe naturelle historiques ou simulés relatifs à une période définie d'au moins plusieurs centaines d'années, lesdits événements de catastrophe naturelle comprenant au moins un identifiant d'événement, un type d'événement, un lieu d'événement, une intensité d'événement et une fréquence d'événement,
un module de structuration de données (11) destiné à attribuer les objets assurés à un type de risque et à une zone géographique de risque d'un groupe de risque (L2), ladite base de données (2) comprenant une clé d'objet enregistrée et attribuée à chacun desdits objets, laquelle comporte au moins un groupe de risque (L2), une unité de risque et un type d'étendue de couverture,
une pluralité de fonctions de sensibilité aux dommages définies et exécutables comprises dans la base de données (2), une fonction de sensibilité aux dommages étant déterminée en fonction du groupe de risque, de la zone de risque, du type de risque et du type d'étendue de couverture attribués à la clé d'objet à l'aide de la base de données (2) et, à l'aide de la fonction de sensibilité aux dommages déterminée et compte tenu de la force ou de l'intensité d'un événement à l'emplacement d'un objet, il est déterminé un niveau de dommage relatif à un événement de catastrophe naturelle enregistré relativement à un type d'événement,
un générateur d'instructions (12) destiné à
- fournir et transmettre différentes données d'instructions destinées à chacune desdites unités à processeur (31, 31', 31 "), lesquelles données d'instructions comprennent des indications portant sur au moins une partie des objets assurés et leur attribution à un type de risque et à une zone géographique de risque d'un groupe de risque (L2), lesdites données d'instructions destinées aux unités à processeur (31, 31', 31") étant respectivement fournies relativement à différentes sous-zones des événements de catastrophe naturelle qui sont divisées entre les unités à processeur (31, 31', 31") et qui peuvent être attribuées à différentes zones de risque, si bien que les données d'instructions destinées à chacune des unités à processeur (31, 31', 31 ") sont fournies avec des indications portant sur des événements de catastrophe naturelle qui sont attribués à une zone de risque pour laquelle l'unité à processeur (31, 31', 31 ") correspondante se voit assigner au moins un objet assuré,
- diviser et transférer les fonctions de sensibilité aux dommages pour les enregistrer dans le cache local (312) des unités à processeur (31, 31', 31 ") en vue du calcul des dommages partiels sur les unités à processeur (31, 31', 31 "), au moins une fonction de sensibilité aux dommages étant respectivement enregistrée dans les caches locaux des unités à processeur, lesdites données d'instructions destinées aux unités à processeur dont les attributions à un type de risque et à une zone géographique de risque déterminent respectivement une fonction de sensibilité aux dommages enregistrée dans le cache local étant fournies,
- affecter à chaque unité à processeur (31, 31', 31") un nombre d'objets aussi uniforme que possible, ladite fonction de sensibilité aux dommages et lesdits objets étant répartis entre les unités à processeur (31, 31', 31"), sachant qu'il n'est attribué à une unité à processeur (31, 31', 31") que ceux des objets assurés pour lesquels il est enregistré une fonction de sensibilité aux dommages dans le cache local de l'unité à processeur (31, 31', 31") correspondante,
des modules de commande (311) destinés à commander les unités à processeur (31, 31', 31") de façon que lesdites unités à processeur (31, 31', 31") calculent, compte tenu de données d'instructions qui leur sont affectées et d'une fonction de sensibilité aux dommages déterminée du fait de l'attribution des objets assurés à un type de risque et à une zone géographique de risque, des indications partielles de dommage relatives à un dommage attendu résultant d'un des événements de catastrophe naturelle sur l'un des objets assurés, ledit module de commande (311) agrégeant les indications partielles de dommage relatives aux objets assurés, relatives aux unités de risque définies par la zone de risque et le type de risque et relatives aux groupes de risque et enregistrant les indications partielles de dommage agrégées dans la base de données (2), et
un module de calcul de dommage (13) destiné à déterminer un dommage attendu relativement à l'ensemble du portefeuille (L3) compte tenu des indications partielles de dommage agrégées de la base de données (2).

2. Système (1) selon la revendication 1, dans lequel au moins une fonction de sensibilité aux dommages est enregistrée dans un cache local (312) dans chacune des unités à processeur (31, 31', 31"), et le générateur d'instructions (12) est conçu pour fournir les données d'instructions destinées à chacune des unités à processeur (31, 31', 31") avec des indications portant sur les objets assurés, dont les attributions à un type de risque et à une zone géographique de risque déterminent chacune une fonction de sensibilité aux dommages enregistrée dans le cache local (312).

3. Système (1) selon l'une des revendications 1 et 2, dans lequel le générateur d'instructions (12) est conçu pour fournir les données d'instructions destinées aux unités à processeur (31, 31', 31 "), respectivement pour différentes sous-zones des événements de catastrophe naturelle divisées entre les unités à processeur (31, 31', 31").

4. Système (1) selon l'une des revendications 1 à 3, dans lequel différents événements de catastrophe naturelle sont attribués en partie à différentes zones de risque et dans lequel le générateur d'instructions (12) est conçu pour fournir les données d'instructions destinées à chacune des unités à processeur (31, 31', 31") avec des indications portant sur les objets assurés d'une zone géographique de risque pour laquelle il est assigné, dans l'unité à processeur correspondante (31, 31', 31"), au moins un événement de catastrophe naturelle attribué.

5. Système (1) selon l'une des revendications 1 à 4, dans lequel différents événements de catastrophe naturelle sont attribués en partie à différentes zones de risque et dans lequel le générateur d'instructions (12) est conçu pour fournir les données d'instructions destinées à chacune des unités à processeur (31, 31', 31") avec des indications portant sur les événements de catastrophe naturelle qui sont attribués à une zone de risque pour laquelle au moins un objet assuré est assigné à l'unité à processeur (31, 31', 31") correspondante.

6. Système (1) selon l'une des revendications 1 à 5, dans lequel au moins une partie des événements de catastrophe naturelle est enregistrée dans un cache local (312) dans chacune des unités à processeur (31, 31', 31"), et dans lequel le générateur d'instructions (12) est conçu pour fournir les données d'instructions destinées à chacune des unités à processeur (31, 31', 31") avec des indications portant sur les objets assurés pour lesquels des indications partielles de dommage doivent être calculées avec des événements de catastrophe naturelle enregistrés dans le cache local (312) de l'unité à processeur (31, 31', 31").

7. Système (1) selon l'une des revendications 1 à 6, dans lequel les données d'instructions comprennent des indications portant sur un jeu d'objets assurés du portefeuille (L3), et dans lequel les modules de commande (311) sont conçus pour recevoir, en provenance d'une mémoire de données, des données portant sur l'événement de catastrophe naturelle utilisées pour l'indication partielle de dommage.

8. Système (1) selon l'une des revendications 1 à 7, dans lequel le module de structuration de données (11) est conçu pour agencer les objets assurés selon une structure de données hiérarchique respective avec les niveaux hiérarchiques classés par ordre décroissant suivant : portefeuille (L3), groupe de risque (L2), zone géographique de risque et type de risque, ainsi que type d'étendue de couverture, et dans lequel les modules de commande (311) sont conçus pour déterminer la fonction de sensibilité aux dommages à utiliser en fonction du groupe de risque (L2), de la zone géographique de risque et du type de risque, ainsi que du type d'étendue de couverture.

9. Système (1) selon l'une des revendications 1 à 8, dans lequel le générateur d'instructions (12) est conçu pour fournir des données d'instructions qui comprennent des indications portant sur l'identification d'une pluralité d'événements de catastrophe naturelle et des indications portant sur l'identification du portefeuille (L3), du groupe de risque (L2), du type de risque et de la zone géographique de risque d'un objet assuré, et dans lequel les modules de commande (311) sont conçus pour enregistrer, en les attribuant à un objet assuré, des indications partielles de dommage calculées.

10. Système (1) selon l'une des revendications 1 à 9, dans lequel les unités à processeur (31, 31', 31") et le générateur d'instructions (12) sont respectivement agencés sur un serveur (3, 3', 3") séparé, lesdits modules de commande (311) étant respectivement agencés sur le serveur (3, 3', 3") avec l'unité à processeur (31, 31', 31") à commander, ledit générateur d'instructions (12) étant conçu pour transmettre les données d'instructions par le biais d'un réseau de communication (4) aux unités à processeur (31, 31', 31") concernées, ledit système (1) comprenant une base de données (2) dans laquelle sont enregistrées des données relatives aux événements de catastrophe naturelle (5), lesdits modules de commande (311) étant conçus pour obtenir les données relatives aux événements de catastrophe naturelle (5) à partir de la base de données (2) si elles ne sont pas enregistrées dans un cache local (312) de l'unité à processeur (31, 31', 31"), lesdites indications portant sur les objets assurés comprenant chacune une valeur d'étendue de couverture, lesdits modules de commande (311) étant conçus pour calculer des indications partielles de dommage relatives à un objet assuré compte tenu de sa valeur d'étendue de couverture, compte tenu de la fonction de sensibilité aux dommages déterminée pour l'objet assuré et compte tenu des données d'un événement de catastrophe naturelle indiquées dans les données d'instructions, et lesdits modules de commande (311) étant conçus pour enregistrer les indications partielles de dommage calculées dans la base de données (2).

11. Procédé mis en oeuvre par ordinateur pour plusieurs unités à processeur (31, 31', 31") en réseau, pour calculer, en répartition sur lesdites plusieurs unités à processeur (31, 31', 31"), les dommages attendus résultant de catastrophes naturelles sur une pluralité d'objets assurés dans un portefeuille (L3), le procédé comprenant :
la connexion desdites plusieurs unités à processeur (31, 31', 31") à une base de données centrale (2) et à une unité de coordination (10) par le biais d'un réseau de télécommunications (4), ladite base de données (2) contenant des événements de catastrophe naturelle historiques ou simulés relatifs à une période définie d'au moins plusieurs centaines d'années, lesdits événements de catastrophe naturelle comprenant au moins un identifiant d'événement, un type d'événement, un lieu d'événement, une intensité d'événement et une fréquence d'événement,
l'attribution (S1) des objets du portefeuille, à l'aide d'un module de structuration de données (11), à un type de risque et à une zone géographique de risque d'un groupe de risque (L2), une clé d'objet attribuée à chacun desdits objets étant enregistrée dans ladite base de données (2) et comportant au moins un groupe de risque (L2), une unité de risque et un type d'étendue de couverture,
la définition d'une pluralité de fonctions de sensibilité aux dommages exécutables comprises dans la base de données (2), une fonction de sensibilité aux dommages étant déterminée en fonction du groupe de risque, de la zone de risque, du type de risque et du type d'étendue de couverture attribués à la clé d'objet à l'aide de la base de données (2) et, à l'aide de la fonction de sensibilité aux dommages déterminée et compte tenu de la force ou de l'intensité d'un événement à l'emplacement d'un objet, il est déterminé un niveau de dommage relatif à un événement de catastrophe naturelle enregistré relativement à un type d'événement,
la fourniture (S2) et la transmission de différentes données d'instructions destinées à chacune desdites plusieurs unités à processeur (31, 31', 31") au moyen du générateur d'instructions (12), lesquelles données d'instructions comprennent des indications portant sur au moins une partie des objets assurés et leur attribution à un type de risque et à une zone géographique de risque d'un groupe de risque (L2), lesdites données d'instructions destinées aux unités à processeur étant respectivement fournies relativement à différentes sous-zones des événements de catastrophe naturelle qui sont divisées entre les unités à processeur et qui peuvent être attribuées à différentes zones de risque, si bien que les données d'instructions destinées à chacune des unités à processeur sont fournies avec des indications portant sur des événements de catastrophe naturelle qui sont attribués à une zone de risque pour laquelle l'unité à processeur correspondante se voit assigner au moins un objet assuré,
la division et le transfert des fonctions de sensibilité aux dommages pour les enregistrer dans le cache local (312) des unités à processeur (31, 31', 31 ") en vue du calcul des dommages partiels sur les unités à processeur (31, 31', 31 "), au moins une fonction de sensibilité aux dommages étant respectivement enregistrée dans les caches locaux des unités à processeur, lesdites données d'instructions destinées aux unités à processeur dont les attributions à un type de risque et à une zone géographique de risque déterminent respectivement une fonction de sensibilité aux dommages enregistrée dans le cache local étant fournies,
l'affectation, à chaque unité à processeur (31, 31', 31") d'un nombre d'objets aussi uniforme que possible, ladite fonction de sensibilité aux dommages et lesdits objets étant répartis entre les unités à processeur (31, 31', 31 "), sachant qu'il n'est attribué à une unité à processeur (31, 31', 31 ") que ceux des objets assurés pour lesquels il est enregistré une fonction de sensibilité aux dommages dans le cache local de l'unité à processeur (31, 31', 31") correspondante,
la commande des unités à processeur (31, 31', 31 ") par des modules de commande (311) respectifs de façon que lesdites unités à processeur (31, 31', 31") déterminent respectivement, compte tenu de l'attribution - contenue dans les données d'instructions qui leurs sont fournies - des objets assurés à un type de risque et à une zone géographique de risque, une fonction de sensibilité aux dommages à utiliser, des indications partielles de dommage relatives au dommage attendu résultant d'un des événements de catastrophe naturelle sur l'un des objets assurés étant calculées (S4) respectivement compte tenu des données d'instructions qui leurs sont fournies et compte tenu de la fonction de sensibilité aux dommages déterminée, et ledit module de commande (311) correspondant agrégeant les indications partielles de dommage relatives aux unités de risque (L1) définies par la zone de risque et le type de risque et/ou relatives aux groupes de risque (L2) et les enregistrant sous la forme d'indications partielles de dommage agrégées dans la base de données (2),
la détermination d'un dommage attendu (S5) relativement à l'ensemble du portefeuille (L3) à l'aide du module de calcul de dommage (13) compte tenu des indications partielles de dommage agrégées de la base de données (2).

12. Procédé selon la revendication 11, dans lequel au moins une fonction de sensibilité aux dommages est enregistrée dans les caches locaux (312) des unités à processeur (31, 31', 31") et les données d'instructions destinées à chacune des unités à processeur (31, 31', 31") sont fournies avec des indications portant sur les objets assurés, dont les attributions à un type de risque et à une zone géographique de risque déterminent chacune une fonction de sensibilité aux dommages enregistrée dans le cache local (312).

13. Procédé selon l'une des revendications 11 et 12, dans lequel les données d'instructions destinées aux unités à processeur (31, 31', 31 ") sont respectivement fournies pour différentes sous-zones des événements de catastrophe naturelle divisées entre les unités à processeur (31, 31', 31").

14. Procédé selon l'une des revendications 11 à 13, dans lequel différents événements de catastrophe naturelle sont attribués en partie à différentes zones de risque et dans lequel les données d'instructions destinées à chacune des unités à processeur (31, 31', 31 ") sont fournies avec des indications portant sur les objets assurés d'une zone géographique de risque pour laquelle il est assigné, dans l'unité à processeur correspondante, au moins un événement de catastrophe naturelle attribué.

15. Procédé selon l'une des revendications 11 à 14, dans lequel différents événements de catastrophe naturelle sont attribués en partie à différentes zones de risque et dans lequel les données d'instructions destinées à chacune des unités à processeur (31, 31', 31 ") sont fournies avec des indications portant sur les événements de catastrophe naturelle qui sont attribués à une zone de risque pour laquelle au moins un objet assuré est assigné à l'unité à processeur (31, 31', 31") correspondante.

16. Procédé selon l'une des revendications 11 à 15, dans lequel au moins une partie des événements de catastrophe naturelle est enregistrée dans un cache local (312) dans chacune des unités à processeur (31, 31', 31"), et dans lequel les données d'instructions destinées à chacune des unités à processeur (31, 31', 31") sont fournies avec des indications portant sur les objets assurés pour lesquels des indications partielles de dommage doivent être calculées avec des événements de catastrophe naturelle enregistrés dans le cache local (312) de l'unité à processeur (31, 31', 31").

17. Procédé selon l'une des revendications 11 à 16, dans lequel les données d'instructions comprennent des indications portant sur un jeu d'objets assurés du portefeuille (L2), et dans lequel des données portant sur l'événement de catastrophe naturelle utilisées pour l'indication partielle de dommage sont obtenues par l'unité à processeur en provenance d'une mémoire de données.

18. Procédé selon l'une des revendications 11 à 17, dans lequel les objets assurés sont agencés selon une structure de données hiérarchique respective avec les niveaux hiérarchiques classés par ordre décroissant suivant : portefeuille (L3), groupe de risque (L2), zone géographique de risque et type de risque, ainsi que type d'étendue de couverture, et dans lequel la fonction de sensibilité aux dommages à utiliser est déterminée en fonction du groupe de risque (L2), de la zone géographique de risque et du type de risque, ainsi que du type d'étendue de couverture.

19. Procédé selon l'une des revendications 11 à 18, dans lequel des données d'instructions sont fournies (S2), lesquelles comprennent des indications portant sur l'identification d'une pluralité d'événements de catastrophe naturelle et des indications portant sur l'identification du portefeuille (L3), du groupe de risque (L2), du type de risque et de la zone géographique de risque d'un objet assuré, et dans lequel des indications partielles de dommage calculées sont enregistrées en étant attribuées à un objet assuré.

20. Procédé selon l'une des revendications 11 à 19, dans lequel les unités à processeur (31, 31', 31") sont respectivement agencées sur un serveur (3, 3', 3") séparé, lesdites données d'instructions étant transmises aux unités à processeur (31, 31', 31 ") concernées par le biais d'un réseau de communication (4), lesdites données relatives aux événements de catastrophe naturelle étant enregistrées dans une base de données (2), lesdites unités à processeur (31, 31', 31") obtenant les données relatives aux événements de catastrophe naturelle à partir de la base de données (2) si elles ne sont pas enregistrées dans un cache local (312) de l'unité à processeur (31, 31', 31"), lesdites indications portant sur les objets assurés comprenant chacune une valeur d'étendue de couverture, lesdites indications partielles de dommage relatives à un objet assuré étant calculées compte tenu de sa valeur d'étendue de couverture, compte tenu de la fonction de sensibilité aux dommages déterminée pour l'objet assuré et compte tenu des données d'un événement de catastrophe naturelle indiquées dans les données d'instructions, et lesdites indications partielles de dommage calculées étant enregistrées dans la base de données (2).
